# EUROPÄISCHE PATENTSCHRIFT

(11) **EP 3 620 250 B1**
(45) Veröffentlichungstag und Bekanntmachung des Hinweises auf die Patenterteilung: **14.12.2022**
(21) Anmeldenummer: 19194823.1
(22) Anmeldetag: 02.09.2019
(51) Int. Cl.: B23D 59/00, B23D 47/02, B23Q 11/00, B25H 1/04, B25H 3/02

(54) **ANORDNUNG AUS EINER AUFNAHMEEINRICHTUNG UND EINEM WERKZEUG**
ARRANGEMENT CONSISTING OF A RECEIVING DEVICE AND A TOOL
SYSTÈME COMPRENANT UN DISPOSITIF DE RÉCEPTION ET UN OUTIL

(30) Priorität: 04.09.2018 DE 202018004096 U
(43) Veröffentlichungstag der Anmeldung: 11.03.2020
(73) Patentinhaber: Ed. Züblin AG, 70567 Stuttgart (DE)
(72) Erfinder:
(74) Vertreter: Reinhardt, Annette

(56) Entgegenhaltungen:
- DE-U1-202004 009 123
- US-A1- 2004 261 903
- US-A1- 2016 325 365
- US-A1- 2017 190 344

## Beschreibung

Die Erfindung betrifft eine Anordnung aus einer Aufnahmeeinrichtung und einem Werkzeug, insbesondere einer Tischkreissäge.

Aus der US 2016/0325365 A1 geht eine Anordnung aus einer Aufnahmeeinrichtung für ein Werkzeug und einem Werkzeug hervor. Das Werkzeug ist eine mit Wasser arbeitende Säge. Die Aufnahmeeinrichtung umfasst eine Auffangwanne sowie ein Zelt, das Spritzwasser auffängt. Am Boden der Auffangwanne ist eine Pumpe angeordnet, die Prozesswasser zurück zum Werkzeug pumpt, um den Wasserverbrauch gering zu halten.

Die US 2017/0190344 A1 offenbart einen Wagen mit Rädern, der in unterschiedlicher Weise konfiguriert werden kann.

Aus der DE 20 2004 009 123 U1 geht eine Tischkreissäge hervor, deren Gehäuse eine Arbeitsplatte mit einer Auflagefläche trägt. Unterhalb der Arbeitsplatte ist ein Maschinenrahmen zur Aufnahme des Motors und des Sägeblatts angeordnet. Die Arbeitsplatte ist klappbar mit dem Gehäuse verbunden.

Die US 2004/0261903 A1 offenbart einen Arbeitstisch, der unterschiedliche Befestigungs- und Verstellmöglichkeiten aufweist. In den Tisch kann eine Tischkreissäge eingesetzt werden. Die US 2004/0261903 A1 offenbart eine Anordnung nach dem Oberbegriff des Anspruchs 1.

Auf Baustellen kommen vielfältige Werkzeuge zum Einsatz. Zum Ablängen oder Zuschneiden beispielsweise von Holz werden üblicherweise Tischkreissägen verwendet. Werkzeuge wie beispielsweise Tischkreissägen produzieren im Betrieb Späne. Diese Späne verschmutzen die Baustelle. Dabei besteht die Gefahr, dass die Späne in Frischbeton gelangen oder an geölten Teilen, beispielsweise an Schalungsteilen, haften bleiben. An geölten Teilen ist die Entfernung der Späne sehr aufwendig. Die Späne müssen daher häufig durch Kehren oder Saugen entfernt werden, was zu erhöhtem Arbeitsaufwand führt.

Es ist wünschenswert, dass Werkzeuge wie Tischkreissägen oder dgl. unmittelbar bei dem zu bearbeitenden Werkstück eingesetzt werden können, um einen Transport des Werkstücks zu vermeiden. Im Bereich von Schalarbeiten, Betonage oder Farbbeschichtungen ist die Erzeugung von Spänen jedoch unerwünscht, da anhaftende Späne das Arbeitsergebnis verschlechtern oder zusätzliche Reinigungsschritte notwendig machen.

Der Erfindung liegt die Aufgabe zugrunde, das Arbeiten mit einem Werkzeug insbesondere auf Baustellen zu vereinfachen und den Arbeitsaufwand beim Arbeiten mit dem Werkzeug zu verringern.

Diese Aufgabe wird durch eine Anordnung aus einer Aufnahmeeinrichtung und einem Werkzeug mit den Merkmalen des Anspruchs 1+ gelöst.

Die Erfindung sieht hierzu eine Aufnahmeeinrichtung für das Werkzeug vor, die einen nach oben offenen Kasten aufweist, in den das Werkzeug gestellt werden kann. Der Kasten selbst bildet einen Spansammelraum für von dem Werkzeug erzeugte Späne. Dadurch, dass die Aufnahmeeinrichtung als nach oben offener Kasten ausgebildet ist, kann das Werkzeug einfach in den Kasten hineingestellt werden. Eine Anpassung der Aufnahmeeinrichtung auf den Spanauswurf des Werkzeugs wird nicht benötigt, da der Spanauswurf üblicherweise im Betrieb nach unten erfolgt. Dadurch, dass das gesamte Werkzeug in den Kasten gestellt wird, werden die Späne unabhängig von dem genauen Austrittsort der Späne in dem Kasten gesammelt.

Eine Anordnung aus einer Aufnahmeeinrichtung und einem Werkzeug sieht vor, dass das Werkzeug einen Arbeitstisch und mindestens einen Standfuß aufweist. Das Werkzeug steht mit dem mindestens einen Standfuß, insbesondere mit allen Standfüßen, in dem Kasten.

Das Werkzeug kann insbesondere gemeinsam mit der Aufnahmeeinrichtung an einem Kran hängend transportiert werden. Dadurch, dass der mindestens eine Standfuß in dem Kasten angeordnet ist, sind Beschädigungen am Standfuß bei hängendem Transport des Werkzeugs auf einfache Weise vermieden.

Der Kasten weist an seinem Boden mindestens eine Öffnung zur Spanentleerung auf. Dadurch, dass die Öffnung an dem Boden des Kastens angeordnet ist, werden die Späne aufgrund der Schwerkraft zu der Öffnung geleitet. Zur Entleerung kann der Kasten mittels des auf Baustellen üblicherweise ohnehin vorhandenen Krans über eine Mulde zur Aufnahme von Abfällen bewegt und dort entleert werden. Vorteilhaft ist ein Schieber zum Öffnen und Schließen der Öffnung vorgesehen. Der Schieber ist insbesondere von Hand zu betätigen und weist hierzu einen Griff auf. In vorteilhafter alternativer Gestaltung ist eine Klappe zum Öffnen und Schließen der Öffnung vorgesehen. Bevorzugt fällt der Boden des Kastens in mindestens einem Bereich zu der Öffnung hin ab. In besonders bevorzugter Gestaltung befindet sich die Öffnung in einem mittigen Bereich des Bodens, und der gesamte Bereich des Bodens außerhalb der Öffnung fällt zu der Öffnung hin ab. In alternativer Gestaltung kann vorgesehen sein, dass der Boden des Kastens eben ausgebildet ist. Bevorzugt ist die Öffnung vergleichsweise groß ausgebildet. Erfindungsgemäß nimmt die Öffnung mehr als ein Viertel, insbesondere mehr als die Hälfte der Fläche des Bodens des Kastens ein.

Die Aufnahmeeinrichtung ist fahrbar. Dadurch kann die Aufnahmeeinrichtung mit dem Werkzeug zusammen auf einfache Weise auf der Baustelle bewegt werden. Insbesondere weist die Aufnahmeeinrichtung mindestens eine um eine vertikale Schwenkachse schwenkbare Rolle und mindestens eine Rolle mit gegenüber dem Kasten ortsfest angeordneter Drehachse auf. Vorteilhaft weist die Aufnahmeeinrichtung mindestens zwei Rollen auf, die unabhängig voneinander um Drehachsen drehbar sind. Vorteilhaft ist mindestens eine Rolle mit gegenüber dem Kasten ortsfest angeordneter Drehachse vorgesehen. Bevorzugt sind die Drehachsen von mindestens zwei Rollen ortsfest gegenüber dem Kasten angeordnet. Vorteilhaft ist mindestens eine Rolle um eine vertikal angeordnete Schwenkachse schwenkbar. Vorteilhaft sind mindestens vier Rollen vorgesehen, von denen mindestens zwei um vertikale Schwenkachsen gegenüber dem Kasten schwenkbar sind und von denen vorteilhaft mindestens zwei Rollen entweder um eine gegenüber dem Kasten ortsfest angeordnete Achse drehbar sind oder um eine vertikale Schwenkachse schwenkbar sind. Die Rollen sind dabei vorteilhaft unabhängig voneinander drehbar und/oder um vertikale Schwenkachsen schwenkbar. In bevorzugter Gestaltung sind zwei schwenkbare Rollen und zwei Rollen mit ortsfest angeordneter Drehachse vorgesehen. In vorteilhafter Gestaltung ist mindestens eine Rolle gefedert gelagert. Dadurch kann verhindert werden, dass bei abruptem Aufsetzen der Aufnahmeeinrichtung auf dem Boden oder bei abruptem Einsetzen des Werkzeugs in den Kasten Schäden an den Lagern der Rollen auftreten. Vorzugsweise sind alle Rollen gefedert gelagert.

Eine Ausführung sieht vor, dass die mindestens eine Rolle an der Unterseite des Kastens angeordnet ist. In bevorzugter alternativer Gestaltung ist mindestens eine Rolle, insbesondere alle Rollen am Boden der Aufnahmeeinrichtung versenkt angeordnet. Dadurch kann die Arbeitshöhe des Arbeitstisches des Werkzeugs gering gehalten werden. Gleichzeitig können Rollen mit vergleichsweise großem Durchmesser zum Einsatz kommen. Dadurch wird die Stabilität der Aufnahmeeinrichtung erhöht, und das Überfahren von Hindernissen wird erleichtert.

Zum Schieben der Aufnahmeeinrichtung weist die Aufnahmeeinrichtung mindestens einen Führungsgriff auf. Bevorzugt ragt der mindestens eine Führungsgriff über die Oberkante des Aufnahmeraums nach oben, so dass der Führungsgriff von einem Bediener ergonomisch zu greifen ist. Bevorzugt ist im Bereich jeder Ecke des Kastens ein Führungsgriff vorgesehen. Mindestens ein Führungsgriff ist als nach oben geschlossener Bügel ausgebildet. An dem mindestens einen Führungsgriff kann dadurch ein Haken eines Krans eingehakt werden. Dadurch kann die Aufnahmeeinrichtung mit oder ohne darin angeordnetem Werkzeug an einem Kran hängend bewegt werden. In besonders vorteilhafter Gestaltung sind vier Führungsgriffe als Ösen zum Einhängen der Aufnahmeeinrichtung vorgesehen. Dadurch ergibt sich eine stabile Lage der Aufnahmeeinrichtung in hängendem Zustand. Vorteilhaft sind die Führungsgriffe benachbart zu den Ecken des Kastens vorgesehen.

Eine einfache Anpassung des Kastens auf das Werkzeug ist möglich, wenn der Kasten an seiner Oberkante mindestens eine Aussparung für das Werkzeug aufweist. Dadurch kann die Oberkante vergleichsweise hoch ausgebildet werden, so dass im Betrieb entstehende Späne weitestgehend in den Spansammelraum gelangen. Besonders bevorzugt ist mindestens eine Aussparung für eine Anhebeöse des Werkzeugs vorgesehen, an der das Werkzeug an einem Kranhaken aufgehängt werden kann. Dadurch kann das Werkzeug mittels eines Krans aus der Aufnahmeeinrichtung gehoben und in die Aufnahmeeinrichtung gesetzt werden. Die mindestens eine Anhebeöse ist dabei vorteilhaft schwenkbar an dem Werkzeug angeordnet.

Für eine Anordnung aus einer Aufnahmeeinrichtung und einem Werkzeug ist vorgesehen, dass das Werkzeug einen Arbeitstisch und mindestens einen Standfuß aufweist, und dass das Werkzeug mit dem mindestens einen Standfuß in dem Kasten steht. Die Größe des Kastens der Aufnahmeeinrichtung ist auf das Werkzeug angepasst. Hierzu ist vorgesehen, dass die Höhe des Spansammelraums vom Boden bis zur Oberkante mindestens 30%, insbesondere mindestens 40% der bis zur Oberseite des Arbeitstischs gemessenen Höhe des Werkzeugs entspricht. Die Höhe des Werkzeugs ist dabei in vertikaler Richtung von der Unterseite der Standfüße zur Oberseite des Arbeitstisches gemessen. Die Höhe des Spansammelraums ist in vertikaler Richtung an der Innenseite einer Seitenwand gemessen. Die Höhe des Spansammelraums ist bei geneigt verlaufendem Boden die geringste Höhe. Die Oberkante des Kastens ist durch die dem Boden abgewandten Kanten der Seitenwände gebildet. Dadurch ragt das Werkzeug über höchstens 70%, insbesondere über höchstens 60% seiner Höhe aus dem Spansammelraum hinaus. Dadurch wird gewährleistet, dass ein Großteil der im Betrieb erzeugten Späne in den Spansammelraum gelangt. Gleichzeitig wird durch eine große Höhe der Seitenwände ein großes Volumen und damit eine große Aufnahmekapazität des Spansammelraums erreicht. Die horizontale Richtung und die vertikale Richtung beziehen sich vorliegend auf eine Anordnung, bei der Aufnahmeeinrichtung und Werkzeug auf einer horizontalen, ebenen Fläche stehen.

Die Breite des Spansammelraums beträgt vorteilhaft 100% bis 120% der Breite des Werkzeugs an den Standfüßen. Die Länge des Spansammelraums beträgt vorteilhaft 100% bis 120% der Länge des Werkzeugs an den Standfüßen. Die Länge und die Breite des Spansammelraums sind demnach nur geringfügig größer als die Länge und Breite des Werkzeugs im Bereich der Standfüße, also in dem Bereich, der in den Spansammelraum ragt. Dadurch kann auch ohne weitere Mittel zur Befestigung des Werkzeugs sichergestellt werden, dass das Werkzeug in dem Spansammelraum sicher steht. Dadurch, dass der Spansammelraum seitlich nur wenig über die Standfüße des Werkzeugs ragt, behindert die Aufnahmeeinrichtung das Arbeiten mit dem Werkzeug nicht. Das Werkzeug bleibt für den Bediener gut zugänglich. In besonders bevorzugter Gestaltung überragt der Arbeitstisch die Oberkante des Kastens an mindestens einer Seite des Kastens seitlich.

Ein Ausführungsbeispiel der Erfindung wird im Folgenden anhand der Zeichnung erläutert. Es zeigen:
- Fig. 1 bis Fig. 3: perspektivische Darstellungen der Aufnahmeeinrichtung,
- Fig. 4 und Fig. 5: perspektivische Darstellungen einer Anordnung aus Aufnahmeeinrichtung und Werkzeug,
- Fig. 6: eine perspektivische Darstellung des Spansammelraums,
- Fig. 7 und Fig. 8: perspektivische Darstellungen der Aufnahmeeinrichtung bei der Spanentleerung.

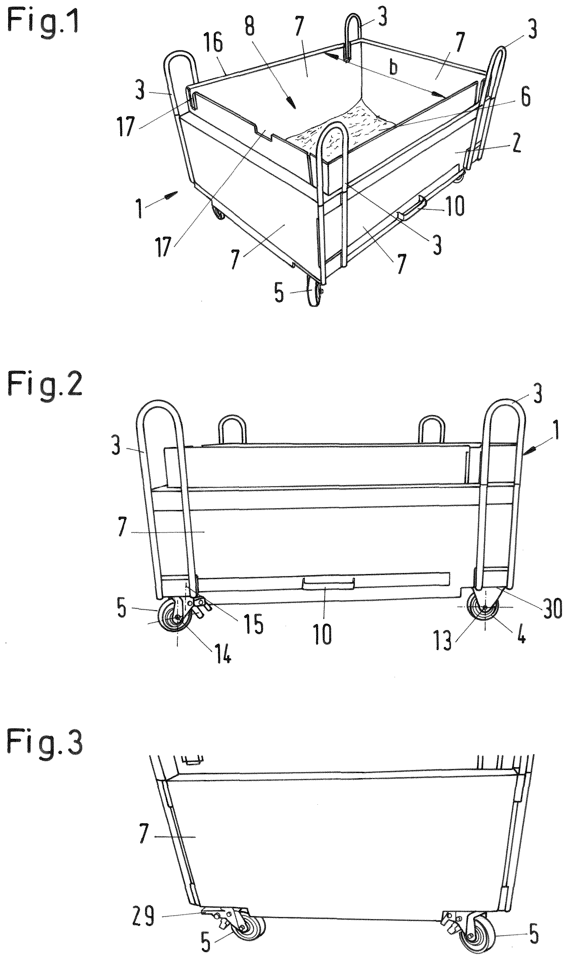

Fig. 1 zeigt in perspektivischer Darstellung eine Aufnahmeeinrichtung 1, die zur Aufnahme eines Werkzeugs auf einer Baustelle dient. Die Aufnahmeeinrichtung 1 ist für Werkzeuge vorgesehen, die mindestens einen Standfuß aufweisen. Vorteilhaft wird die Aufnahmeeinrichtung für ein Werkzeug eingesetzt, bei dem der Spanauswurf nach unten erfolgt, wie beispielsweise bei einer Tischkreissäge. Die Aufnahmeeinrichtung 1 besitzt einen nach oben offenen Kasten 2. Der Kasten 2 ist im Ausführungsbeispiel näherungsweise quaderförmig ausgebildet und besitzt einen Boden 6 sowie vier Seitenwände 7, die einen Spansammelraum 8 begrenzen. Der Spansammelraum 8 ist der Innenraum des Kastens 2. Wie Fig. 1 zeigt, weist der Spansammelraum 8 eine in horizontaler Richtung zwischen gegenüberliegenden Seitenwänden 7 gemessene Breite b auf. In Fig. 1 ist außerdem ein Griff 10 dargestellt, der sich an der Außenseite des Kastens 1 etwa auf der Höhe des Bodens 6 erstreckt und der im Folgenden noch näher beschrieben wird.

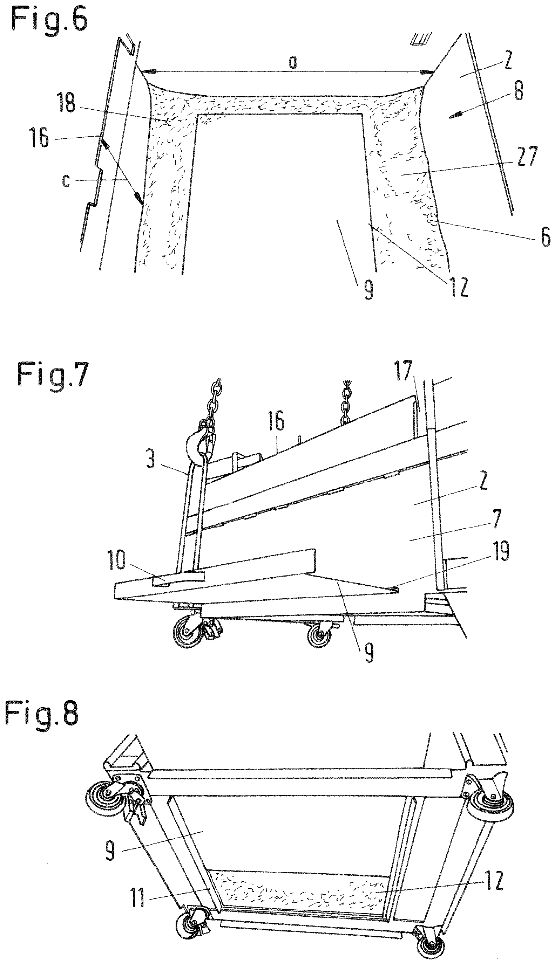

Zum Schieben der Aufnahmeeinrichtung 1 sind im Ausführungsbeispiel vier Führungsgriffe 3 vorgesehen, die als näherungsweise U-förmige Bügel über eine Oberkante 16 des Kastens 2 nach oben ragen. Die Führungsgriffe 3 sind nach oben geschlossen ausgebildet und bilden Einhängeösen, an denen Haken eines Krans eingehängt werden können, wie Fig. 7 zeigt. Über die Führungsgriffe 3 kann die Aufnahmeeinrichtung 1 einfach mit einem Kran angehoben werden.

Die Aufnahmeeinrichtung 1 weist Rollen zum Führen der Aufnahmeeinrichtung 1 über den Boden auf, von denen in Fig. 1 eine Rolle 5 sichtbar ist. Wie Fig. 1 auch zeigt, weist der Kasten 2 an seiner Oberkante 16 Aussparungen 17 auf, die zur Aufnahme von Teilen des Werkzeugs dienen, die über den Spansammelraum 8 seitlich hinausragen.

Wie die Seitenansicht aus Fig. 2 zeigt, weist die Aufnahmeeinrichtung 1 eine feste Rolle 4 auf, die um eine gegenüber dem Kasten 2 ortsfest angeordnete Drehachse 13 drehbar gelagert ist. Außerdem besitzt die Aufnahmeeinrichtung 1 die Rolle 5, die um eine Drehachse 14 drehbar gelagert ist. Bei der Rolle 5 handelt es sich um eine schwenkbare Rolle, die um eine vertikal angeordnete Schwenkachse 15 schwenkbar gelagert ist. Dadurch kann die Aufnahmeeinrichtung 1 gut gelenkt werden. Im Ausführungsbeispiel sind zwei feste Rollen 4 und zwei schwenkbare Rollen 5 vorgesehen, die im Bereich der gegenüberliegenden Querseiten des Kastens 2 an der Unterseite 30 des Bodens 6 des Kastens 2 fixiert sind. Im Ausführungsbeispiel sind die Rollen 4 und 5 an der Unterseite 30 des Kastens 2 angeordnet. Die Rollen 4 und/oder 5 können jedoch im Boden 6 des Kastens 2 versenkt angeordnet sein. Die Rollen 4 und 5 sind um ihre Drehachsen 13 und 14 unabhängig voneinander drehbar. Vorteilhaft ist mindestens eine Rolle 4, 5 gefedert gegenüber dem Kasten 2 gelagert. Insbesondere sind alle Rollen 4, 5 der Aufnahmeeinrichtung 1 gefedert gelagert. Auch andere Kombinationen von Rollen 4 und schwenkbaren Rollen 5 können vorteilhaft sind. Insbesondere sind mindestens zwei, bevorzugt mindestens vier Rollen 4, 5 vorgesehen. Auch eine größere Anzahl von Rollen 4 und/oder von Rollen 5 kann vorteilhaft sein.

Fig. 3 zeigt eine Ansicht auf die Seitenwand 7, benachbart zu der die beiden schwenkbaren Rollen 5 angeordnet sind. Wie Fig. 3 zeigt, weist die Rolle 5 eine Feststelleinrichtung 29 auf, mit der die Rolle 5 fixiert werden kann, um im Betrieb beim Arbeiten mit einem in der Aufnahmeeinrichtung 1 angeordneten Werkzeug ein Bewegen der Aufnahmeeinrichtung 1 und damit ein Bewegen des Werkzeugs zu vermeiden.

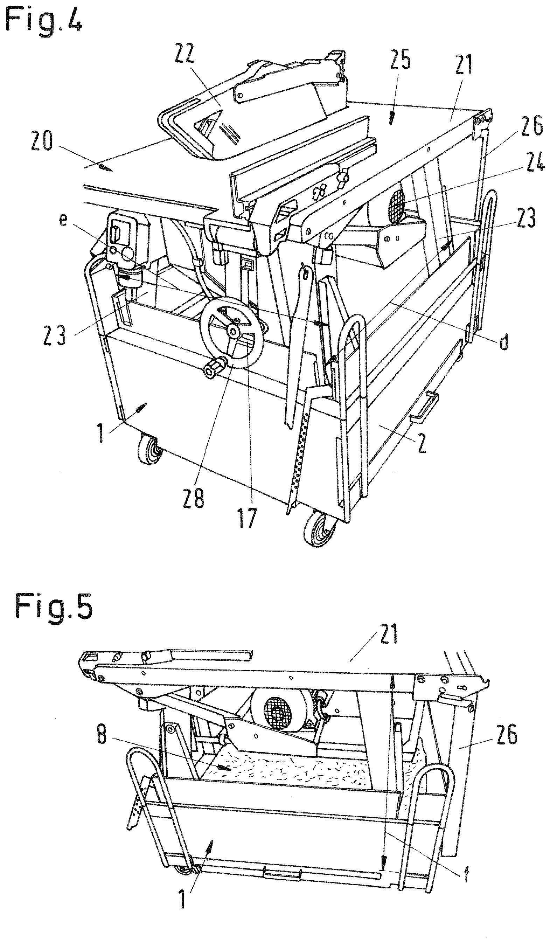

Die Fig. 4 und 5 zeigen eine Anordnung aus der Aufnahmeeinrichtung 1 und einem Werkzeug 20, im Ausführungsbeispiel einer Tischkreissäge. Das Werkzeug 20 weist im Ausführungsbeispiel vier Standfüße 23 auf, die einen Arbeitstisch 21 tragen. Das Werkzeug 20 ist mit den Standfüßen 23 im Spansammelraum 8 angeordnet und steht mit den Standfüßen 23 auf dem Boden 6 des Spansammelraums 8 auf. Die Anordnung ist dabei so getroffen, dass die Standfüße 23 sich außerhalb einer Öffnung 12 am Boden 6 abstützen. Wie Fig. 4 zeigt, weist das Werkzeug 20 einen Schutz 22 auf, der ein Zerspanwerkzeug, insbesondere ein Kreissägeblatt des Werkzeugs 20 abdeckt. Zum Antrieb des Kreissägeblatts weist das Werkzeug 20 einen Antriebsmotor 24 auf.

An einer Seite des Arbeitstischs 21 ist ein Klapptisch 26 gelagert, der zur Vergrößerung der Auflagefläche des Arbeitstischs 21 nach oben geklappt werden kann. In den Fig. 4 und 5 ist der Klapptisch 26 nach unten geklappt und liegt an der Außenseite einer Seitenwand 7 der Aufnahmeeinrichtung 1 an. Wie Fig. 4 auch zeigt, weist das Werkzeug 20 ein Handrad 28 auf, das durch eine Aussparung 17 auf die Außenseite des Spansammelraums 8 ragt.

Wie Fig. 4 schematisch zeigt, besitzt das Werkzeug 20 im Bereich der Standfüße 23, insbesondere in dem in den Spansammelraum 8 ragenden Bereich der Standfüße 23 eine Breite e und eine Länge d. Die Breite e des Werkzeugs 20 ist dabei in der gleichen Richtung gemessen wie die Breite b des Spansammelraums 8 (Fig. 1). Wie Fig. 6 zeigt, besitzt der Spansammelraum 8 eine Länge a. Die Länge a ist in einer Richtung senkrecht zur Breite b gemessen. Die Längen a und d und die Breiten b und e sind in horizontaler Richtung gemessen. Die Breite e des Werkzeugs 20 ist in der gleichen Richtung gemessen wie die Breite b des Spansammelraums 8. Die Breite b des Spansammelraums 8 entspricht vorteilhaft 100% bis 120% der Breite e des Werkzeugs 20 an den Standfüßen 23. Die Länge a des Spansammelraums 8 entspricht 100% bis 120% der Länge d des Werkzeugs 20 im Bereich der Standfüße 23. Der Spansammelraum 8 ist demnach genau so groß oder etwas größer als die Länge und Breite des Werkzeugs 20. Dadurch ist das Werkzeug 20 im Spansammelraum 8 in definierter Position angeordnet. Eine weitere Positionierung des Werkzeugs 20 ergibt sich aufgrund der Aussparungen 17 in den Seitenwänden 7.

Der Arbeitstisch 21 besitzt eine Oberseite 25, wie Fig. 4 zeigt. Das Werkzeug 20 besitzt eine vom Boden zur Oberseite 25 gemessene Höhe f. Wie Fig. 6 zeigt, besitzt der Spansammelraum 8 eine Höhe c. Die Höhe c ist vom Boden 6 zur Oberkante 16 des Kastens 2 gemessen. Die Höhe c des Spansammelraums 8 beträgt mindestens 30%, insbesondere mindestens 40% der Höhe f des Werkzeugs 20. Dadurch ist das Werkzeug 20 in der Aufnahmeeinrichtung 1 sicher gehalten, und ein Großteil der im Betrieb entstehenden Späne gelangt in den Spansammelraum 8.

Wie die Fig. 6 bis 8 zeigen, weist der Kasten 2 am Boden 6 eine Öffnung 12 auf. Im Ausführungsbeispiel ist die Öffnung 12 sehr groß ausgebildet und erstreckt sich über mehr als 25 %, insbesondere über mehr als 50 % der Fläche des Bodens 6. Die Öffnung 12 ist mittig im Boden 6 angeordnet. Zwischen der Öffnung 12 und den Seitenwänden 7 erstreckt sich ein umlaufender Streifen. Dieser umlaufende Streifen bildet vorteilhaft einen geneigten Bereich 27 des Bodens 6, in dem der Boden 6 zur Öffnung 12 hin abfällt. In dem Bereich, in dem Standfüße eines Werkzeugs auf dem Boden 6 stehen, ist der Boden 6 vorteilhaft eben ausgebildet. In alternativer Gestaltung kann der Boden 6 über seine gesamte Fläche eben ausgebildet sein. Die Öffnung 12 ist von einem Schieber 9 verschlossen, wie Fig. 6 zeigt. Wie Fig. 8 zeigt, ist der Schieber 9 in Führungen 11 am Boden 6 geführt. Der Griff 10 ist am Schieber 9 fixiert. Wird der Schieber 9 am Griff 10 nach außen gezogen, so können Späne 18 aus dem Spansammelraum 8 durch die Öffnung 12 herausfallen und entsorgt werden. Wie Fig. 7 zeigt, ragt der Schieber 9 durch einen Schlitz 19 in einer Seitenwand 7 des Kastens 2. Der Schlitz 19 führt dazu, dass auf dem Schieber 9 aufliegende Späne 18 beim Herausziehen des Schiebers 9 abgestreift werden und im Inneren des Kastens 2 verbleiben oder durch die Öffnung 12 nach unten fallen.

Bevorzugt weist der Schieber 9 eine Endarretierung auf, die eine Endstellung des Schiebers 9 festlegt. Die Endarretierung kann beispielsweise durch seitliche Stifte gebildet sein. Die Endarretierung vermeidet, dass der Schieber 9 zu weit nach außen gezogen werden kann.

In vorteilhafter Ausführungsvariante ist statt des Schiebers 9 eine Klappe zum Öffnen der Offnung 12 vorgesehen. In weiterer nicht erfindungsgemäßen Ausführungsvariante kann die Offnung 12 anstatt am Boden 6 im unteren Bereich einer Seitenwand 7 vorgesehen sein. Auch eine solche seitliche Öffnung kann mittels einer Klappe oder eines Schiebers zu öffnen sein. Durch Anheben der Aufnahmeeinrichtung 1 an einer Seite mit einem Kran ist ein einfaches Entleeren des Spansammelraums 8 durch eine in einer Seitenwand 7 vorgesehene Öffnung 12 möglich.

Erfindungsgemäß sind die Führungsgriffe der Aufnahmeeinrichtung 1 als Bügel ausgebildet, an denen die Aufnahmeeinrichtung 1 an einem Kran eingehängt werden kann. Dadurch kann die Aufnahmeeinrichtung 1 mit oder ohne daran angeordnetem Werkzeug 20 auf einfache Weise auf einer Baustelle versetzt werden.

## Patentansprüche

1. Anordnung aus einer Aufnahmeeinrichtung für ein Werkzeug und einem Werkzeug, wobei das Werkzeug (20) einen Arbeitstisch (21) und mindestens einen Standfuß (23) aufweist, wobei die Aufnahmeeinrichtung (1) einen nach oben offenen Kasten (2) aufweist, wobei das Werkzeug (20) mit dem mindestens einen Standfuß (23) in dem Kasten (2) steht, wobei der Kasten (2) einen Spansammelraum (8) für von dem Werkzeug (20) erzeugte Späne (18) bildet, und dass die Höhe (c) des Spansammelraums (8) vom Boden (6) des Kastens (2) bis zur Oberkante (16) des Kastens (2) mindestens 30% der bis zur Oberseite (25) des Arbeitstisches (21) gemessenen Höhe (f) des Werkzeugs (20) entspricht,
**dadurch gekennzeichnet, dass** der Kasten (2) an seinem Boden (6) mindestens eine Öffnung (12) zur Spanentleerung aufweist, wobei die Öffnung (12) sich über mehr als 25% der Fläche des Bodens (6) erstreckt, dass die Aufnahmeeinrichtung (1) fahrbar ist und Rollen (5) zum Führen der Aufnahmeeinrichtung (1) über den Boden aufweist und dass die Aufnahmeeinrichtung (1) mindestens einen Führungsgriff (3) zum Schieben der Aufnahmeeinrichtung (1) aufweist, wobei der mindestens eine Führungsgriff (3) als nach oben geschlossener Bügel ausgebildet ist, an dem ein Haken eines Krans eingehakt werden kann.

2. Anordnung nach Anspruch 1,
**dadurch gekennzeichnet, dass** ein Schieber (9) oder eine Klappe zum Öffnen und Schließen der Öffnung (12) vorgesehen ist.

3. Anordnung nach Anspruch 1 oder 2,
**dadurch gekennzeichnet, dass** der Boden (6) des Kastens (2) in mindestens einem Bereich zu der Öffnung (12) hin abfällt.

4. Anordnung nach einem der Ansprüche 1 bis 3,
**dadurch gekennzeichnet, dass** die Aufnahmeeinrichtung (1) mindestens zwei Rollen (4, 5) aufweist, die unabhängig voneinander um Drehachsen (13, 14) drehbar sind.

5. Anordnung nach einem der Ansprüche 1 bis 4,
**dadurch gekennzeichnet, dass** die Aufnahmeeinrichtung (1) mindestens eine Rolle (5) aufweist, die um eine vertikale Schwenkachse (15) schwenkbar ist.

6. Anordnung nach einem der Ansprüche 1 bis 5,
**dadurch gekennzeichnet, dass** die Aufnahmeeinrichtung (1) mindestens eine Rolle (4) mit gegenüber dem Kasten (2) ortsfest angeordneter Drehachse (13) aufweist.

7. Anordnung nach einem der Ansprüche 1 bis 6,
**dadurch gekennzeichnet, dass** mindestens eine Rolle (4, 5) der Aufnahmeeinrichtung (1) gefedert gelagert ist.

8. Anordnung nach einem der Ansprüche 1 bis 7,
**dadurch gekennzeichnet, dass** der Kasten (2) an seiner Oberkante (16) mindestens eine Aussparung (17) für das Werkzeug (20) aufweist.

9. Anordnung nach einem der Ansprüche 1 bis 8,
**dadurch gekennzeichnet, dass** die Höhe (c) des Spansammelraums (8) vom Boden (6) bis zur Oberkante (16) mindestens 40% der bis zur Oberseite (25) des Arbeitstisches (21) gemessenen Höhe (f) des Werkzeugs (20) entspricht.

10. Anordnung nach einem der Ansprüche 1 bis 9,
**dadurch gekennzeichnet, dass** die Breite (b) des Spansammelraums (8) 100% bis 120% der Breite (e) des Werkzeugs (20) an den Standfüßen (23) entspricht und dass die Länge (a) des Spansammelraums (8) 100% bis 120% der Länge (d) des Werkzeugs (20) an den Standfüßen (23) entspricht.

11. Anordnung nach einem der Ansprüche 1 bis 10,
**dadurch gekennzeichnet, dass** der Arbeitstisch (21) die Oberkante (16) des Kastens (2) an mindestens einer Seite des Kastens (2) seitlich überragt.

## Claims

1. Arrangement consisting of a receptacle installation for a tool and a tool, wherein the tool (20) has a work bench (21) and at least one pedestal (23), wherein the receptacle installation (1) has a box (2) which is open towards the top, wherein the tool (20) by way of the at least one pedestal (23) stands in the box (2), wherein the box (2) forms a chip collection space (8) for chips (18) generated by the tool (20), and the height (c) of the chip collection (8) space, from the base (6) of the box (2) up to the upper edge (16) of the box (2), corresponds to at least 30% of the height (f) of the tool (20) measured to the upper side (25) of the work bench (21),
**characterized in that** the box (2) on the base (6) thereof has at least one opening (12) for emptying chips, wherein the opening (12) extends across more than 25% of the area of the base (6), **in that** the receptacle installation (1) is mobile and has rollers (5) for guiding the receptacle installation (1) across the floor, and **in that** the receptacle installation (1) has at least one guide handle (3) for pushing the receptacle installation (1), wherein the at least one guide handle (3) is configured as a bracket which is closed towards the top and to which a hook of a crane can be hooked.

2. Arrangement according to Claim 1,
**characterized in that** a slide (9) or a flap for opening or closing the opening (12) is provided.

3. Arrangement according to Claim 1 or 2,
**characterized in that** the base (6) of the box (2) in at least one region slopes downwards towards the opening (12).

4. Arrangement according to one of Claims 1 to 3,
**characterized in that** the receptacle installation (1) has at least two rollers (4, 5) which in a mutually independent manner are rotatable about rotation axes (13, 14).

5. Arrangement according to one of Claims 1 to 4,
**characterized in that** the receptacle installation (1) has at least one roller (5) which is pivotable about a vertical pivot axis (15).

6. Arrangement according to one of Claims 1 to 5,
**characterized in that** the receptacle installation (1) has at least one roller (4), the latter having a rotation axis (13) that is disposed so as to be stationary in relation to the box (2).

7. Arrangement according to one of Claims 1 to 6,
**characterized in that** at least one roller (4, 5) of the receptacle installation (1) is spring-mounted.

8. Arrangement according to one of Claims 1 to 7,
**characterized in that** the box (2) on the upper edge (16) thereof has at least one clearance (17) for the tool (20).

9. Arrangement according to one of Claims 1 to 8,
**characterized in that** the height (c) of the chip collection space (8), from the base (6) up to the upper edge (16), is at least 40% of the height (f) of the tool (20) measured to the upper side (25) of the work bench (21).

10. Arrangement according to one of Claims 1 to 9,
**characterized in that** the width (b) of the chip collection space (8) corresponds to 100% to 120% of the width (e) of the tool (20) at the pedestals (23), and **in that** the length (a) of the chip collection space (8) corresponds to 100% to 120% of the length (d) of the tool (20) at the pedestals (23).

11. Arrangement according to one of Claims 1 to 10,
**characterized in that** the work bench (21) on at least one side of the box (2) protrudes laterally beyond the upper edge (16) of the box (2).

## Revendications

1. Agencement composé d'un dispositif de réception pour un outil et d'un outil, l'outil (20) présentant un plan de travail (21) et au moins un pied (23), dans lequel le dispositif de réception (1) présente un caisson (2) ouvert vers le haut, dans lequel l'outil (20) se trouve dans le caisson (2) avec ledit au moins un pied (23), dans lequel le caisson (2) constitue un espace de collecte de copeaux (8) pour des copeaux (18) produits par l'outil (20), et la hauteur (c) de l'espace de collecte de copeaux (8) du fond (6) du caisson (2) jusqu'au bord supérieur (16) du caisson (2) correspond à au moins 30 % de la hauteur (f) de l'outil (20), mesurée jusqu'à la face supérieure (25) du plan de travail (21),
**caractérisé en ce que** le caisson (2) présente sur son fond (6) au moins une ouverture (12) pour l'évacuation des copeaux, l'ouverture (12) s'étendant sur plus de 25 % de la surface du fond (6), **en ce que** le dispositif de réception (1) peut rouler et présente des roulettes (5) pour guider le dispositif de réception (1) sur le sol, et **en ce que** le dispositif de réception (1) présente au moins une poignée de guidage (3) pour pousser le dispositif de réception (1), dans lequel ladite au moins une poignée de guidage (3) est réalisée sous la forme d'une anse fermée vers le haut à laquelle peut s'accrocher le crochet d'une grue.

2. Agencement selon la revendication 1,
**caractérisé en ce qu'**une vanne (9) ou un volet est prévu(e) pour ouvrir et fermer l'ouverture (12).

3. Agencement selon la revendication 1 ou 2,
**caractérisé en ce que** le fond (6) du caisson (2) est inclinée dans au moins une zone en direction de l'ouverture (12).

4. Agencement selon l'une quelconque des revendications 1 à 3,
**caractérisé en ce que** le dispositif de réception (1) présente au moins deux roulettes (4, 5) qui peuvent tourner indépendamment l'une de l'autre autour d'axes de rotation (13, 14).

5. Agencement selon l'une quelconque des revendications 1 à 4,
**caractérisé en ce que** le dispositif de réception (1) présente au moins une roulette (5) qui peut pivoter autour un axe de pivotement vertical (15).

6. Agencement selon l'une quelconque des revendications 1 à 5,
**caractérisé en ce que** le dispositif de réception (1) présente au moins une roulette (4) pourvue d'un axe de rotation (13) disposé de manière stationnaire par rapport au caisson (2).

7. Agencement selon l'une quelconque des revendications 1 à 6,
**caractérisé en ce qu'**au moins une roulette (4, 5) du dispositif de réception (1) est montée sur ressort.

8. Agencement selon l'une quelconque des revendications 1 à 7,
**caractérisé en ce que** le caisson (2) présente au niveau de son bord supérieur (16) au moins un évidement (17) pour l'outil (20).

9. Agencement selon l'une quelconque des revendications 1 à 8,
**caractérisé en ce que** la hauteur (c) de l'espace de collecte de copeaux (8) du fond (6) jusqu'au bord supérieur (16) correspond à au moins 40 % de la hauteur (f) de l'outil (20), mesurée jusqu'à la face supérieure (25) du plan de travail (21).

10. Agencement selon l'une quelconque des revendications 1 à 9,
**caractérisé en ce que** la largeur (b) de l'espace de collecte de copeaux (8) correspond à 100 % à 120 % de la largeur (e) de l'outil (20) au niveau des pieds (23), et **en ce que** la longueur (a) de l'espace de collecte de copeaux (8) correspond à 100 % à 120 % de la longueur (d) de l'outil (20) au niveau des pieds (23).

11. Agencement selon l'une quelconque des revendications 1 à 10,
**caractérisé en ce que** le plan de travail (21) dépasse latéralement du bord supérieur (16) du caisson (2) sur au moins une face du caisson (2).
